(19)

Europäisches Patentamt
European Patent Office
Office européen des brevets

(11) **EP 4 550 777 A1**

(12) **EUROPEAN PATENT APPLICATION**
published in accordance with Art. 153(4) EPC

(43) Date of publication:
07.05.2025 Bulletin 2025/19

(21) Application number: 23831840.6

(22) Date of filing: 26.06.2023

(51) International Patent Classification (IPC):
H04N 19/105 (2014.01)   H04N 19/70 (2014.01)
H04N 19/593 (2014.01)   H04N 19/176 (2014.01)

(52) Cooperative Patent Classification (CPC):
H04N 19/105; H04N 19/176; H04N 19/593;
H04N 19/70

(86) International application number:
PCT/KR2023/008850

(87) International publication number:
WO 2024/005480 (04.01.2024 Gazette 2024/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.06.2022 KR 20220079698

(71) Applicant: LG Electronics Inc.
Yeongdeungpo-gu
Seoul 07336 (KR)

(72) Inventors:
• HONG, Myungoh
  Seoul 06772 (KR)
• LIM, Jaehyun
  Seoul 06772 (KR)
• NAM, Jung Hak
  Seoul 06772 (KR)
• CHOI, Jangwon
  Seoul 06772 (KR)

(74) Representative: Frenkel, Matthias Alexander
Wuesthoff & Wuesthoff
Patentanwälte und Rechtsanwalt PartG mbB
Schweigerstraße 2
81541 München (DE)

(54) **IMAGE ENCODING/DECODING METHOD BASED ON MULTIPLE REFERENCE LINES, METHOD FOR TRANSMITTING BITSTREAM, AND RECORDING MEDIUM ON WHICH BITSTREAM IS STORED**

(57) An image encoding/decoding method, a bitstream transmission method, and a computer-readable recording medium on which a bitstream is stored are provided. The method by which an image decoding device decodes an image, according to the present disclosure, may comprise: generating prediction values obtained by predicting a first reference line for the current block on the basis of each of a plurality of reference lines for the current block; calculating errors between the respective prediction values and a restoration value of the first reference line; and deriving, on the basis of the errors, at least one second reference line to be used for intra prediction of the current block from among the plurality of reference lines.

FIG. 11

START
↓ S1110
GENERATE PREDICTION VALUES FOR FIRST REFERENCE LINE
↓ S1120
CALCULATE ERRORS
↓ S1130
DERIVE SECOND REFERENCE LINE
↓
END

## Description

### Technical Field

The present disclosure relates to an image encoding/decoding method and apparatus, a method of transmitting a bitstream and a recording medium storing the bitstream, and relates to prediction based on multiple reference lines.

### Background Art

Recently, demand for high-resolution and high-quality images such as high definition (HD) images and ultra high definition (UHD) images is increasing in various fields. As resolution and quality of image data are improved, the amount of transmitted information or bits relatively increases as compared to existing image data. An increase in the amount of transmitted information or bits causes an increase in transmission cost and storage cost.

Accordingly, there is a need for high-efficient image compression technology for effectively transmitting, storing and reproducing information on high-resolution and high-quality images.

### Disclosure

### Technical Problem

An object of the present disclosure is to provide an image encoding/decoding method and apparatus with improved encoding/decoding efficiency.

In addition, an object of the present disclosure is to propose a multi-reference line mode based on a template.

In addition, an object of the present disclosure is to propose a method of deriving multiple reference line indices based on a template.

In addition, an object of the present disclosure is to propose a method of reordering a list of multiple reference line index candidates based on a template.

In addition, an object of the present disclosure is to propose a method of combining vertical multiple reference line indices and horizontal multiple reference line indices.

Also, an object of the present disclosure is to provide a recording medium storing a bitstream generated by an image encoding method or apparatus according to the present disclosure.

Also, an object of the present disclosure is to provide a recording medium storing a bitstream received, decoded and used to reconstruct an image by an image decoding apparatus according to the present disclosure.

Also, an object of the present disclosure is to provide a method of transmitting a bitstream generated by an image encoding method or apparatus according to the present disclosure.

The technical problems solved by the present disclosure are not limited to the above technical problems and other technical problems which are not described herein will become apparent to those skilled in the art from the following description.

### Technical Solution

An image decoding method according to an aspect of the present disclosure is an image decoding method performed by an image decoding apparatus. The image decoding method may comprise generating prediction values obtained by predicting a first reference line for a current block based on each of a plurality of reference lines for the current block, calculating errors between the prediction values and reconstruction values of the first reference line, and deriving at least one second reference line to be used for intra prediction of the current block among the plurality of reference lines, based on the errors.

An image encoding method according to another aspect of the present disclosure is an image encoding method performed by an image encoding apparatus. The image encoding method may comprise generating prediction values obtained by predicting a first reference line for a current block based on each of a plurality of reference lines for the current block, calculating errors between the prediction values and reconstruction values of the first reference line, and deriving at least one second reference line to be used for intra prediction of the current block among the plurality of reference lines, based on the errors.

A computer-readable recording medium according to another aspect of the present disclosure may store a bitstream generated by an image encoding method or apparatus according to the present disclosure.

A transmission method according to another aspect of the present disclosure may transmit a bitstream generated by an image encoding method or apparatus according to the present disclosure.

The features briefly summarized above with respect to the present disclosure are merely exemplary aspects of the detailed description below of the present disclosure, and do not limit the scope of the present disclosure.

**Advantageous Effects**

According to the present disclosure, it is possible to provide an image encoding/decoding method and apparatus with improved encoding/decoding efficiency.

Also, according to the present disclosure, prediction performance can be improved and coding efficiency can be enhanced by deriving multiple reference line indices without signaling them.

Also, according to the present disclosure, bit efficiency for corresponding index signaling can be improved by reordering multiple reference line index candidates.

Also, according to the present disclosure, it is possible to provide a non-transitory recording medium storing a bitstream generated by an image encoding method according to the present disclosure.

Also, according to the present disclosure, it is possible to provide a non-transitory recording medium storing a bitstream received, decoded and used to reconstruct an image by an image decoding apparatus according to the present disclosure.

Also, according to the present disclosure, it is possible to provide a method of transmitting a bitstream generated by an image encoding method.

It will be appreciated by persons skilled in the art that that the effects that can be achieved through the present disclosure are not limited to what has been particularly described hereinabove and other advantages of the present disclosure will be more clearly understood from the detailed description.

**Description of Drawings**

FIG. 1 is a view schematically showing a video coding system, to which an embodiment of the present disclosure is applicable.

FIG. 2 is a view schematically showing an image encoding apparatus, to which an embodiment of the present disclosure is applicable.

FIG. 3 is a view schematically showing an image decoding apparatus, to which an embodiment of the present disclosure is applicable.

FIG. 4 is a flowchart illustrating an image encoding method based on intra prediction.

FIG. 5 is a diagram schematically showing an intra prediction unit in an image encoding apparatus.

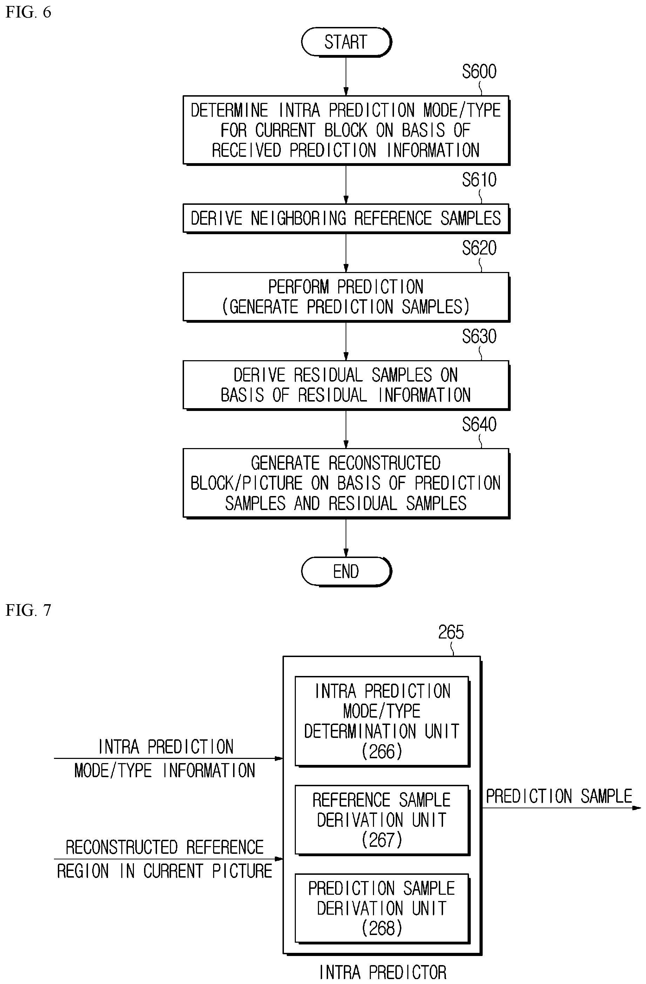

FIG. 6 is a flowchart illustrating an image encoding method based on intra prediction.

FIG. 7 is a diagram schematically showing an intra prediction unit in an image decoding apparatus.

FIG. 8 is a diagram for explaining a method of deriving an intra mode based on a template.

FIG. 9 and FIG. 10 are diagrams for explaining a multi-reference line mode.

FIG. 11 is a flowchart illustrating an image encoding method and an image decoding method according to one embodiment of the present disclosure.

FIGS. 12 and 13 are diagrams for explaining a multi-reference line mode based on a template.

FIG. 14 is a flowchart illustrating an image encoding method according to another embodiment of the present disclosure.

FIG. 15 is a flowchart illustrating an image decoding method according to another embodiment of the present disclosure.

FIG. 16 is a flowchart illustrating an image encoding method and an image decoding method according to another embodiment of the present disclosure.

FIG. 17 is a drawing for explaining a combination between reference lines.

FIG. 18 is a view showing a content streaming system to which an embodiment of the present disclosure is applicable.

**Mode for Invention**

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, if it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

In the present disclosure, a "picture" generally refers to a unit representing one image at a specific time, and a slice/tile is a coding unit constituting a portion of a picture, and a picture may be composed of one or more slices/tiles. In addition, a slice/tile may include one or more coding tree units (CTUs).

A "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In the present disclosure, a "unit" may represent a basic unit of image processing. The unit may include at least one of a specific region of the picture and information related to the region. The unit may be used interchangeably with the terms such as "sample array", "block" or "area" in some cases. In a general case, an $M \times N$ block may include a set (or array) of samples (or a sample array) or transform coefficients of M columns and N rows.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean a block including both a luma component block and a chroma component block or "a luma block of a current block" unless explicitly stated as a chroma block. The luma component block of the current block may be expressed by including an explicit description of a luma component block such as "luma block" or "current luma block. In addition, the "chroma component block of the current block" may be expressed by including an explicit description of a chroma component block, such as "chroma block" or "current chroma block".

In the present disclosure, the term "/" and "," should be interpreted to indicate "and/or." For instance, the expression "A/B" and "A, B" may mean "A and/or B." Further, "A/B/C" and "A/B/C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

### Overview of video coding system

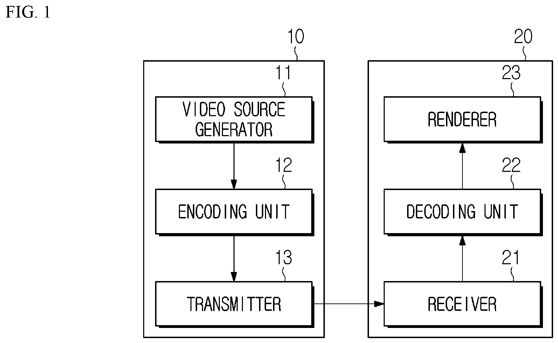

FIG. 1 is a view showing a video coding system to which an embodiment of the present disclosure is applicable.

The video coding system according to an embodiment may include an encoding device 10 and a decoding device 20. The encoding device 10 may deliver encoded video and/or image information or data to the decoding device 20 in the form of a file or streaming via a digital storage medium or network.

The encoding device 10 according to an embodiment may include a video source generator 11, an encoding unit(encoder) 12 and a transmitter 13. The decoding device 20 according to an embodiment may include a receiver 21, a decoding unit(decoder) 22 and a renderer 23. The encoding unit 12 may be called a video/image encoding apparatus, and the decoding unit 22 may be called a video/image decoding apparatus. The transmitter 13 may be included in the encoding unit 12. The receiver 21 may be included in the decoding unit 22. The renderer 23 may include a display and the display may be configured as a separate device or an external component.

The video source generator 11 may acquire a video/image through a process of capturing, synthesizing or generating the video/image. The video source generator 11 may include a video/image capture device and/or a video/image generating device. The video/image capture device may include, for example, one or more cameras, video/image archives including previously captured video/images, and the like. The video/image generating device may include, for example, computers, tablets and smartphones, and may (electronically) generate video/images. For example, a virtual video/image may be generated through a computer or the like. In this case, the video/image capturing process may be replaced by a process of generating related data.

The encoding unit 12 may encode an input video/image. The encoding unit 12 may perform a series of procedures such as prediction, transform, and quantization for compression and coding efficiency. The encoding unit 12 may output encoded data (encoded video/image information) in the form of a bitstream.

The transmitter 13 may obtain the encoded video/image information or data output in the form of a bitstream and forward it to the receiver 21 of the decoding apparatus 20 or another external object through a digital storage medium or a network in the form of a file or streaming. The digital storage medium may include various storage mediums such as USB, SD, CD, DVD, Blu-ray, HDD, SSD, and the like. The transmitter 13 may include an element for generating a media file through a predetermined file format and may include an element for transmission through a broadcast/communication network. The transmitter 13 may be provided as a transmission device separate from the encoding apparatus 12, and in this case, the transmission device may include at least one processor that acquires encoded video/image information or data output in the form of a bitstream and a transmission unit for transmitting it in the form of a file or streaming. The receiver 21 may extract/receive the bitstream from the storage medium or network and transmit the bitstream to the decoding unit 22.

The decoding unit 22 may decode the video/image by performing a series of procedures such as dequantization, inverse transform, and prediction corresponding to the operation of the encoding unit 12.

The renderer 23 may render the decoded video/image. The rendered video/image may be displayed through the display.

### Overview of image encoding apparatus

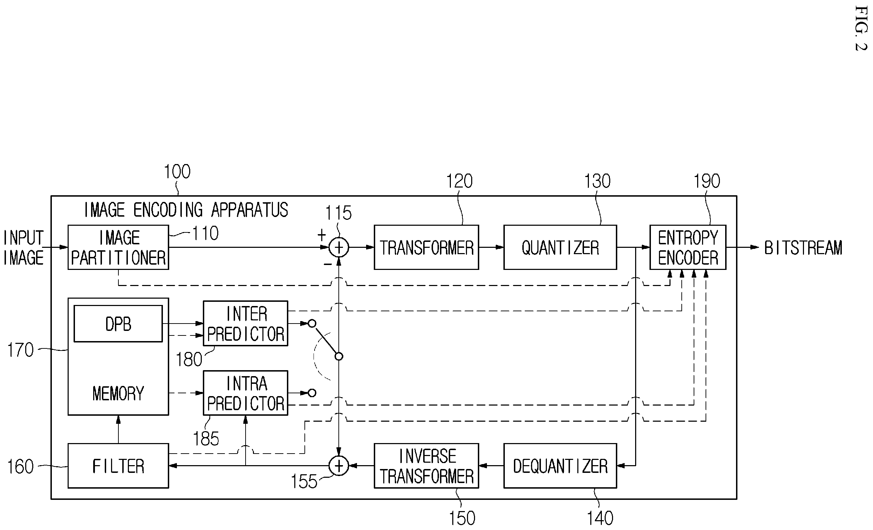

FIG. 2 is a view schematically showing an image encoding apparatus, to which an embodiment of the present disclosure is applicable.

As shown in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter prediction unit 180, an intra prediction unit 185 and an entropy encoder 190. The inter prediction unit 180 and the intra prediction unit 185 may be collectively referred to as a "prediction unit". The transformer 120, the quantizer 130, the dequantizer 140 and the inverse transformer 150 may be included in a residual processor. The residual processor may further include the subtractor 115.

All or at least some of the plurality of components configuring the image encoding apparatus 100 may be configured by one hardware component (e.g., an encoder or a processor) in some embodiments. In addition, the memory 170 may include a decoded picture buffer (DPB) and may be configured by a digital storage medium.

The image partitioner 110 may partition an input image (or a picture or a frame) input to the image encoding apparatus 100 into one or more processing units. For example, the processing unit may be called a coding unit (CU). The coding unit may be acquired by recursively partitioning a coding tree unit (CTU) or a largest coding unit (LCU) according to a quad-tree binary-tree ternary-tree (QT/BT/TT) structure. For example, one coding unit may be partitioned into a plurality of coding units of a deeper depth based on a quad tree structure, a binary tree structure, and/or a ternary structure. For partitioning of the coding unit, a quad tree structure may be applied first and the binary tree structure and/or ternary structure may be applied later. The coding procedure according to the present disclosure may be performed based on the final coding unit that is no longer partitioned. The largest coding unit may be used as the final coding unit or the coding unit of deeper depth acquired by partitioning the largest coding unit may be used as the final coding unit. Here, the coding procedure may include a procedure of prediction, transform, and reconstruction, which will be described later. As another example, the processing unit of the coding procedure may be a prediction unit (PU) or a transform unit (TU). The prediction unit and the transform unit may be split or partitioned from the final coding unit. The prediction unit may be a unit of sample prediction, and the transform unit may be a unit for deriving a transform coefficient and/or a unit for deriving a residual signal from the transform coefficient.

The prediction unit (the inter prediction unit 180 or the intra prediction unit 185) may perform prediction on a block to be processed (current block) and generate a predicted block including prediction samples for the current block. The prediction unit may determine whether intra prediction or inter prediction is applied on a current block or CU basis. The prediction unit may generate various information related to prediction of the current block and transmit the generated information to the entropy encoder 190. The information on the prediction may be encoded in the entropy encoder 190 and output in the form of a bitstream.

The intra prediction unit 185 may predict the current block by referring to the samples in the current picture. The referred samples may be located in the neighborhood of the current block or may be located apart according to the intra prediction mode and/or the intra prediction technique. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra prediction unit 185 may determine the prediction mode applied to the current block by using a prediction mode applied to a neighboring block.

The inter prediction unit 180 may derive a predicted block for the current block based on a reference block (reference sample array) specified by a motion vector on a reference picture. In this case, in order to reduce the amount of motion information transmitted in the inter prediction mode, the motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like. The reference picture including the temporal neighboring block may be called a collocated picture (colPic). For example, the inter prediction unit 180 may configure a motion information candidate list based on neighboring blocks and generate information indicating which candidate is used to derive a motion vector and/or a reference picture index of the current block. Inter prediction may be performed based on various prediction modes. For example, in the case of a skip mode and a merge mode, the inter prediction unit 180 may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and the motion vector of the current block may be signaled by encoding a motion vector difference and an indicator for a motion vector predictor. The motion vector difference may mean a difference between the motion vector of the current block and the motion vector predictor.

The prediction unit may generate a prediction signal based on various prediction methods and prediction techniques described below. For example, the prediction unit may not only apply intra prediction or inter prediction but also simultaneously apply both intra prediction and inter prediction, in order to predict the current block. A prediction method of simultaneously applying both intra prediction and inter prediction for prediction of the current block may be called combined inter and intra prediction (CIIP). In addition, the prediction unit may perform intra block copy (IBC) for prediction of the current block. Intra block copy may be used for content image/video coding of a game or the like, for example, screen content coding (SCC). IBC is a method of predicting a current picture using a previously reconstructed reference block in the current picture at a location apart from the current block by a predetermined distance. When IBC is applied, the location of the reference block in the current picture may be encoded as a vector (block vector) corresponding to the predetermined distance. IBC basically performs prediction in the current picture, but may be performed similarly to inter prediction in that a reference block is derived within the current picture. That is, IBC may use at least one of the inter prediction techniques described in the present disclosure.

The prediction signal generated by the prediction unit may be used to generate a reconstructed signal or to generate a residual signal. The subtractor 115 may generate a residual signal (residual block or residual sample array) by subtracting the prediction signal (predicted block or prediction sample array) output from the prediction unit from the input image signal (original block or original sample array). The generated residual signal may be transmitted to the transformer 120.

The transformer 120 may generate transform coefficients by applying a transform technique to the residual signal. For example, the transform technique may include at least one of a discrete cosine transform (DCT), a discrete sine transform (DST), a karhunen-loève transform (KLT), a graph-based transform (GBT), or a conditionally non-linear transform (CNT). Here, the GBT means transform obtained from a graph when relationship information between pixels is represented by the graph. The CNT refers to transform acquired based on a prediction signal generated using all previously reconstructed pixels. In addition, the transform process may be applied to square pixel blocks having the same size or may be applied to blocks having a variable size rather than square.

The quantizer 130 may quantize the transform coefficients and transmit them to the entropy encoder 190. The entropy encoder 190 may encode the quantized signal (information on the quantized transform coefficients) and output a bitstream. The information on the quantized transform coefficients may be referred to as residual information. The quantizer 130 may rearrange quantized transform coefficients in a block type into a one-dimensional vector form based on a coefficient scanning order and generate information on the quantized transform coefficients based on the quantized transform coefficients in the one-dimensional vector form.

The entropy encoder 190 may perform various encoding methods such as, for example, exponential Golomb, context-adaptive variable length coding (CAVLC), context-adaptive binary arithmetic coding (CABAC), and the like. The entropy encoder 190 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. The signaled information, transmitted information and/or syntax elements described in the present disclosure may be encoded through the above-described encoding procedure and included in the bitstream.

The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 190 and/or a storage unit (not shown) storing the signal may be included as internal/external element of the image encoding apparatus 100. Alternatively, the transmitter may be provided as the component of the entropy encoder 190.

The quantized transform coefficients output from the quantizer 130 may be used to generate a residual signal. For example, the residual signal (residual block or residual samples) may be reconstructed by applying dequantization and inverse transform to the quantized transform coefficients through the dequantizer 140 and the inverse transformer 150.

The adder 155 adds the reconstructed residual signal to the prediction signal output from the inter prediction unit 180 or the intra prediction unit 185 to generate a reconstructed signal (reconstructed picture, reconstructed block, reconstructed sample array). If there is no residual for the block to be processed, such as a case where the skip mode is applied, the predicted block may be used as the reconstructed block. The adder 155 may be called a reconstructor or a reconstructed block generator. The generated reconstructed signal may be used for intra prediction of a next block to be processed in the current picture and may be used for inter prediction of a next picture through filtering as described below.

The filter 160 may improve subjective/objective image quality by applying filtering to the reconstructed signal. For example, the filter 160 may generate a modified reconstructed picture by applying various filtering methods to the reconstructed picture and store the modified reconstructed picture in the memory 170, specifically, a DPB of the memory 170. The various filtering methods may include, for example, deblocking filtering, a sample adaptive offset, an adaptive loop filter, a bilateral filter, and the like. The filter 160 may generate various information related to filtering and transmit the generated information to the entropy encoder 190 as described later in the description of each filtering method. The information related to filtering may be encoded by the entropy encoder 190 and output in the form of a bitstream.

The modified reconstructed picture transmitted to the memory 170 may be used as the reference picture in the inter prediction unit 180. When inter prediction is applied through the image encoding apparatus 100, prediction mismatch between the image encoding apparatus 100 and the image decoding apparatus may be avoided and encoding efficiency may be improved.

The DPB of the memory 170 may store the modified reconstructed picture for use as a reference picture in the inter prediction unit 180. The memory 170 may store the motion information of the block from which the motion information in the current picture is derived (or encoded) and/or the motion information of the blocks in the picture that have already been reconstructed. The stored motion information may be transmitted to the inter prediction unit 180 and used as the motion information of the spatial neighboring block or the motion information of the temporal neighboring block. The memory 170 may store reconstructed samples of reconstructed blocks in the current picture and may transfer the reconstructed samples to the intra prediction unit 185.

## Overview of image decoding apparatus

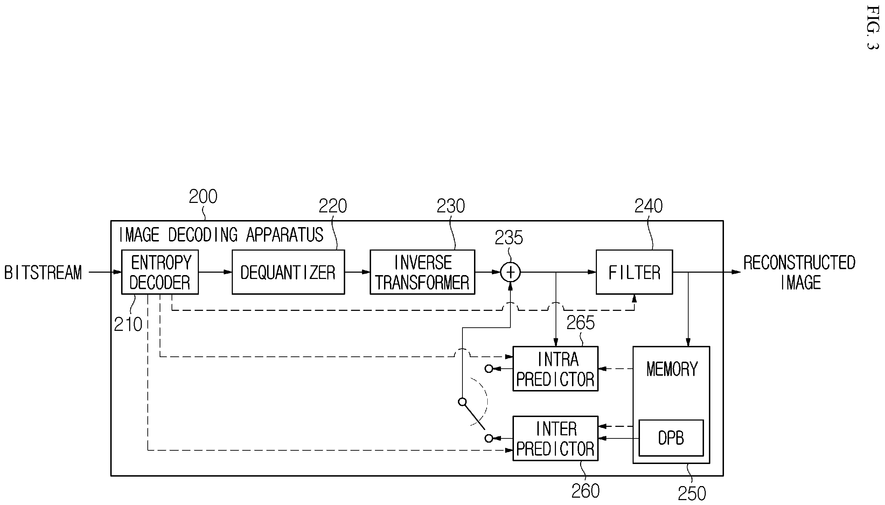

FIG. 3 is a view schematically showing an image decoding apparatus, to which an embodiment of the present disclosure is applicable.

As shown in FIG. 3, the image decoding apparatus 200 may include an entropy decoder 210, a dequantizer 220, an inverse transformer 230, an adder 235, a filter 240, a memory 250, an inter prediction unit 260 and an intra prediction unit 265. The inter prediction unit 260 and the intra prediction unit 265 may be collectively referred to as a "prediction unit". The dequantizer 220 and the inverse transformer 230 may be included in a residual processor.

All or at least some of a plurality of components configuring the image decoding apparatus 200 may be configured by a hardware component (e.g., a decoder or a processor) according to an embodiment. In addition, the memory 170 may include a decoded picture buffer (DPB) or may be configured by a digital storage medium.

The image decoding apparatus 200, which has received a bitstream including video/image information, may reconstruct an image by performing a process corresponding to a process performed by the image encoding apparatus 100 of FIG. 2. For example, the image decoding apparatus 200 may perform decoding using a processing unit applied in the image encoding apparatus. Thus, the processing unit of decoding may be a coding unit, for example. The coding unit may be acquired by partitioning a coding tree unit or a largest coding unit. The reconstructed image signal decoded and output through the image decoding apparatus 200 may be reproduced through a reproducing apparatus (not shown).

The image decoding apparatus 200 may receive a signal output from the image encoding apparatus of FIG. 2 in the form of a bitstream. The received signal may be decoded through the entropy decoder 210. For example, the entropy decoder 210 may parse the bitstream to derive information (e.g., video/image information) necessary for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The image decoding apparatus may further decode picture based on the information on the parameter set and/or the general constraint information. Signaled/received information and/or syntax elements described in the present disclosure may be decoded through the decoding procedure and obtained from the bitstream. For example, the entropy decoder 210 decodes the information in the bitstream based on a coding method such as exponential Golomb coding, CAVLC, or CABAC, and output values of syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a neighboring block and a decoding target block or information of a symbol/bin decoded in a previous stage, and perform arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 210 may be provided to the prediction unit (the inter prediction unit 260 and the intra prediction unit 265), and the residual value on which the entropy decoding was performed in the entropy decoder 210, that is, the quantized transform coefficients and related parameter information, may be input to the dequantizer 220. In addition, information on filtering among information decoded by the entropy decoder 210 may be provided to the filter 240. Meanwhile, a receiver (not shown) for receiving a signal output from the image encoding apparatus may be further configured as an internal/external element of the image decoding apparatus 200, or the receiver may be a component of the entropy decoder 210.

Meanwhile, the image decoding apparatus according to the present disclosure may be referred to as a video/image/picture decoding apparatus. The image decoding apparatus may be classified into an information decoder (video/image/picture information decoder) and a sample decoder (video/image/picture sample decoder). The information decoder may include the entropy decoder 210. The sample decoder may include at least one of the dequantizer 220, the inverse transformer 230, the adder 235, the filter 240, the memory 250, the inter prediction unit 160 or the intra prediction unit 265.

The dequantizer 220 may dequantize the quantized transform coefficients and output the transform coefficients. The dequantizer 220 may rearrange the quantized transform coefficients in the form of a two-dimensional block. In this case, the rearrangement may be performed based on the coefficient scanning order performed in the image encoding apparatus. The dequantizer 220 may perform dequantization on the quantized transform coefficients by using a quantization parameter (e.g., quantization step size information) and obtain transform coefficients.

The inverse transformer 230 may inversely transform the transform coefficients to obtain a residual signal (residual block, residual sample array).

The prediction unit may perform prediction on the current block and generate a predicted block including prediction samples for the current block. The prediction unit may determine whether intra prediction or inter prediction is applied to the current block based on the information on the prediction output from the entropy decoder 210 and may determine a specific intra/inter prediction mode (prediction technique).

It is the same as described in the prediction unit of the image encoding apparatus 100 that the prediction unit may generate the prediction signal based on various prediction methods (techniques) which will be described later.

The intra prediction unit 265 may predict the current block by referring to the samples in the current picture. The description of the intra prediction unit 185 is equally applied to the intra prediction unit 265.

The inter prediction unit 260 may derive a predicted block for the current block based on a reference block (reference sample array) specified by a motion vector on a reference picture. In this case, in order to reduce the amount of motion information transmitted in the inter prediction mode, motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. For example, the inter prediction unit 260 may configure a motion information candidate list based on neighboring blocks and derive a motion vector of the current block and/or a reference picture index based on the received candidate selection information. Inter prediction may be performed based on various prediction modes, and the information on the prediction may include information indicating a mode of inter prediction for the current block.

The adder 235 may generate a reconstructed signal (reconstructed picture, reconstructed block, reconstructed sample array) by adding the obtained residual signal to the prediction signal (predicted block, predicted sample array) output from the prediction unit (including the inter prediction unit 260 and/or the intra prediction unit 265). If there is no residual for the block to be processed, such as when the skip mode is applied, the predicted block may be used as the reconstructed block. The description of the adder 155 is equally applicable to the adder 235. The adder 235 may be called a reconstructor or a reconstructed block generator. The generated reconstructed signal may be used for intra prediction of a next block to be processed in the current picture and may be used for inter prediction of a next picture through filtering as described below.

The filter 240 may improve subjective/objective image quality by applying filtering to the reconstructed signal. For example, the filter 240 may generate a modified reconstructed picture by applying various filtering methods to the reconstructed picture and store the modified reconstructed picture in the memory 250, specifically, a DPB of the memory 250. The various filtering methods may include, for example, deblocking filtering, a sample adaptive offset, an adaptive loop filter, a bilateral filter, and the like.

The (modified) reconstructed picture stored in the DPB of the memory 250 may be used as a reference picture in the inter prediction unit 260. The memory 250 may store the motion information of the block from which the motion information in the current picture is derived (or decoded) and/or the motion information of the blocks in the picture that have already been reconstructed. The stored motion information may be transmitted to the inter prediction unit 260 so as to be utilized as the motion information of the spatial neighboring block or the motion information of the temporal neighboring block. The memory 250 may store reconstructed samples of reconstructed blocks in the current picture and transfer the reconstructed samples to the intra prediction unit 265.

In the present disclosure, the embodiments described in the filter 160, the inter prediction unit 180, and the intra prediction unit 185 of the image encoding apparatus 100 may be equally or correspondingly applied to the filter 240, the inter prediction unit 260, and the intra prediction unit 265 of the image decoding apparatus 200.

**Intra prediction**

Intra prediction may represent prediction for generating prediction samples for a current block based on reference samples in a picture to which a current block belongs (hereinafter referred to as a current picture). When intra prediction applies to a current block, neighboring reference samples to be used for intra prediction of the current block may be derived. The neighboring reference samples of the current block may include a total of 2xnh samples adjacent to a left boundary of the current block having a size of nWxnH and samples adjacent to a bottom-left, a total of 2xnW samples adjacent to a top boundary of the current block and samples adjacent to a top-right, and one sample adjacent to a top-left of the current block. Alternatively, the neighboring reference samples of the current block may include a plurality of columns of top neighboring samples and a plurality of rows of left neighboring samples. In addition, the neighboring reference samples of the current block may include a total of nH samples adjacent to a right boundary of the current block having a size of nWxnH, a total of nW samples adjacent to a bottom boundary of the current block and one sample adjacent to a bottom-right of the current block.

However, some of the neighboring reference samples of the current block have not yet been decoded or may not be available. In this case, the image decoding apparatus 200 may construct neighboring reference samples to be used for prediction by substituting unavailable samples with available samples. Alternatively, neighboring reference samples to be used for prediction may be constructed through interpolation of available samples.

When the neighboring reference samples are derived, (i) a prediction sample may be derived based on an average or interpolation of neighboring reference samples of the current block, and (ii) the prediction sample may be derived based on a reference sample present in a specific (prediction) direction with respect to the prediction sample among the neighboring reference samples of the current block. The case of (i) may be called a non-directional mode or a non-angular mode, and the case of (ii) may be called a directional mode or an angular mode. Also, the prediction sample may be generated through interpolation of the second neighboring sample and the first neighboring sample positioned in the opposite direction of the prediction direction of the intra prediction mode of the current block based on the prediction sample of the current block among the neighboring reference samples. The above-described case may be referred to as linear interpolation intra prediction (LIP). In addition, chroma prediction samples may be generated based on luma samples using a linear model. This case may be called an LM mode. In addition, a temporary prediction sample of the current block may be derived based on the filtered neighboring reference samples, and the prediction sample of the current block may be derived by a weighted sum of at least one reference sample derived according to the intra prediction mode among the existing neighboring reference samples, that is, unfiltered neighboring reference samples, and the temporary prediction sample. The above-described case may be referred to as position dependent intra prediction (PDPC). In addition, a reference sample line with the highest prediction accuracy is selected from among multiple neighboring reference sample lines of the current block to derive the prediction sample using the reference sample located in the prediction direction in the corresponding line, and, at this time, intra prediction encoding may be performed by indicating (signaling) the used reference sample line to the image decoding apparatus 200. The above-described case may be referred to as multi-reference line (MRL) intra prediction or MRL-based intra prediction. In addition, intra prediction is performed based on the same intra prediction mode by partitioning the current block into vertical or horizontal sub-partitions, and neighboring reference samples may be derived and used in units of the sub-partitions. That is, in this case, the intra prediction mode for the current block is equally applied to the sub-partitions, but the intra prediction performance may be improved in some cases by deriving and using neighboring reference samples in units of sub-partitions. This prediction method may be called intra sub-partitions (ISP) or ISP-based intra prediction. The above-described intra prediction methods may be called an intra prediction type to be distinguished from the intra prediction mode in Table of Contents 1.2. The intra prediction type may be called various terms such as intra prediction technique or additional intra prediction mode. For example, the intra prediction type (or additional intra prediction mode, etc.) may include at least one of the aforementioned LIP, PDPC, MRL or ISP A general intra prediction method excluding a specific intra prediction type such as LIP, LM, PDPC, MRL, and ISP may be referred to as a normal intra prediction type. The normal intra prediction type may be generally applied when the above specific intra prediction type is not applied, and prediction may be performed based on the above-described intra prediction mode. Meanwhile, if necessary, post-processing filtering may be performed on the derived prediction sample.

Specifically, the intra prediction procedure may include an intra prediction mode/type determination step, a neighboring reference sample derivation step, and an intra prediction mode/type based prediction sample derivation step. In addition, if necessary, a post-filtering step may be performed on the derived prediction sample.

Meanwhile, in addition to the above-described intra prediction types, affine linear weighted intra prediction (ALWIP) may be used. The ALWIP may be referred to as linear weighted intra prediction (LWIP) or matrix weighted intra prediction or matrix based intra prediction (MIP). If the MIP is applied to the current block, i) neighboring reference samples on which an averaging procedure has been performed is used, ii) matrix-vector-multiplication procedure is performed, and iii) a horizontal/vertical interpolation procedure is further performed to derive prediction samples for the current block as necessary. The intra prediction modes used for the MIP may be configured to be different from the intra prediction modes used in the LIP, PDPC, MRL, ISP intra prediction or normal intra prediction. The intra prediction mode for the MIP may be called a MIP intra prediction mode, a MIP prediction mode, or a MIP mode. For example, a matrix and offset used in the matrix vector multiplication may be set differently according to the intra prediction mode for the MIP. Here, the matrix may be called a (MIP) weighting matrix, and the offset may be called a (MIP) offset vector or a (MIP) bias vector. A detailed MIP method will be described later.

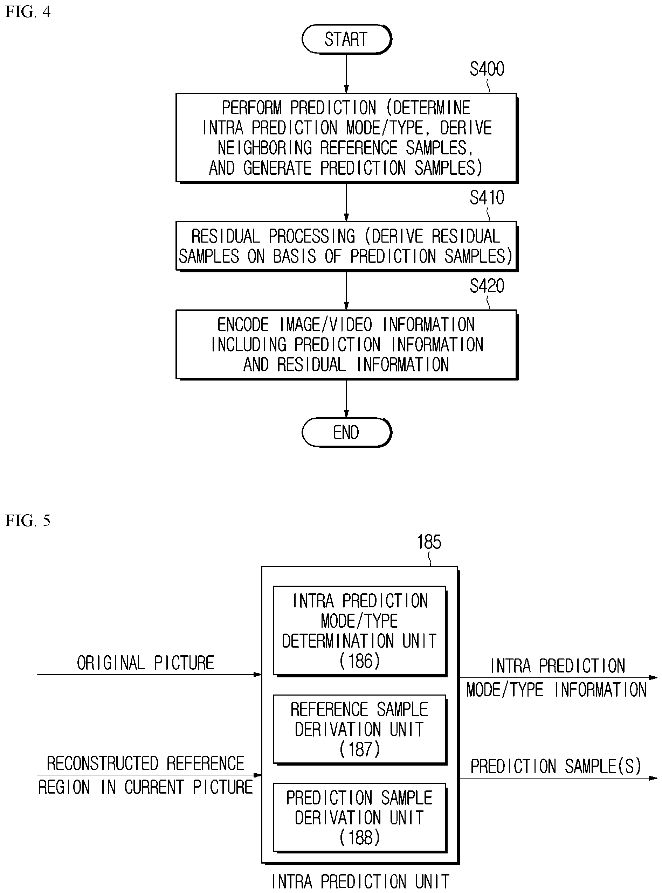

A block reconstruction procedure based on intra prediction and the intra prediction unit 185 in the image encoding apparatus 100 may schematically include, for example, FIGS. 4 and 5.

Step S400 may be performed by the intra prediction unit 185 of the image encoding apparatus 100, and step S410 may be performed by the residual processor of the image encoding apparatus 100. Specifically, step S410 may be performed by the subtractor 115 of the image encoding apparatus 100. In step S420, prediction information may be derived by the intra prediction unit 185 and encoded by the entropy encoder 190. In step S420, residual information may be derived by the residual processor and encoded by the entropy encoder 190. The residual information is information about the residual samples. The residual information may include information about quantized transform coefficients for the residual samples. As described above, the residual samples may be derived as transform coefficients through the transformer 120 of the image encoding apparatus 100, and the transform coefficients may be derived as quantized transform coefficients through the quantizer 130. Information about the quantized transform coefficients may be encoded in the entropy encoder 190 through a residual coding procedure.

The image encoding apparatus 100 performs intra prediction on the current block (S400). The image encoding apparatus 100 may derive an intra prediction mode/type for the current block, derive neighboring reference samples of the current block, and generate prediction samples in the current block based on the intra prediction mode/type and the neighboring reference samples. Here, a procedure for determining an intra prediction mode/type, a procedure for deriving neighboring reference samples and a procedure for generating prediction samples may be simultaneously performed, or any one procedure may be performed before another procedure. For example, the intra prediction unit 185 of the image encoding apparatus 100 may include an intra prediction mode/type determination unit 186, a reference sample derivation unit 187, a prediction sample derivation unit 188. The intra prediction mode/type determination unit 186 may determine the intra prediction mode/type for the current block, the reference sample derivation unit 187 may derive neighboring reference samples of the current block, and the prediction sample derivation unit 188 may derive the prediction samples of the current block. Meanwhile, although not shown, when the prediction sample filtering procedure is performed, the intra prediction unit 185 may further include a prediction sample filter (not shown). The image encoding apparatus 100 may determine a mode/type applied to the current block among a plurality of intra prediction modes/types. The image encoding apparatus 100 may compare RD costs of the intra prediction modes/types and determine an optimal intra prediction mode/type for the current block.

Meanwhile, the image encoding apparatus 100 may perform a prediction sample filtering procedure. Predictive sample filtering may be referred to as post filtering. Some or all of the prediction samples may be filtered by the prediction sample filtering procedure. In some cases, the prediction sample filtering procedure may be omitted.

The image encoding apparatus 100 may generate residual samples for the current block based on (filtered) prediction samples (S410). The image encoding apparatus 100 may compare the prediction samples with the original samples of the current block based on phase and derive the residual samples.

The image encoding apparatus 100 may encode image information including information on intra prediction (prediction information) and residual information of the residual samples (S420). The prediction information may include the intra prediction mode information and the intra prediction type information. The image encoding apparatus 100 may output encoded image information in the form of a bitstream. The output bitstream may be sent to the image decoding apparatus 200 through a storage medium or a network.

The residual information may include a residual coding syntax described below. The image encoding apparatus 100 may transform/quantize the residual samples to derive quantized transform coefficients. The residual information may include information on the quantized transform coefficients.

Meanwhile, as described above, the image encoding apparatus 100 may generate a reconstructed picture (including reconstructed samples and a reconstructed block). To this end, the image encoding apparatus 100 may perform dequantization/inverse transform with respect to the quantized transform coefficients again to derive (modified) residual samples. The residual samples are transformed/quantized and then dequantized/inversely transformed, in order to derive the same residual samples as the residual samples derived in the image decoding apparatus 200 as described above. The image encoding apparatus 100 may generate a reconstructed block including the reconstructed samples for the current block based on the prediction samples and the (modified) residual samples. A reconstructed picture for the current picture may be generated based on the reconstructed block. As described above, an in-loop filtering procedure is further applicable to the reconstructed picture.

A video/image decoding procedure based on intra prediction and the intra prediction unit in the image decoding apparatus 200 may schematically include, for example, the following.

The image decoding apparatus 200 may perform operation corresponding to operation performed by the image encoding apparatus 100.

Steps S600 to S620 may be performed by the intra prediction unit 265 of the image decoding apparatus 200, and the prediction information of step S600 and the residual information of step S630 may be obtained from a bitstream by the entropy decoding unit 210 of the image decoding apparatus 200. The residual processor of the image decoding apparatus 200 may derive the residual samples for the current block based on the residual information. Specifically, the dequantizer 220 of the residual processor may perform dequantization based on quantized transform coefficients derived based on the residual information to derive transform coefficients, and the inverse transformer 230 of the residual processor may perform inverse transform with respect to the transform coefficients to derive the residual samples for the current block. Step S640 may be performed by the adder 235 or the reconstructor of the image decoding apparatus 200.

Specifically, the image decoding apparatus 200 may derive an intra prediction mode/type for the current block based on the received prediction information (intra prediction mode/type information) (S600). The image decoding apparatus 200 may derive neighboring reference samples of the current block (S610). The image decoding apparatus 200 may generate prediction samples in the current blocks based on the intra prediction mode/type and the neighboring reference samples (S620). In this case, the image decoding apparatus 200 may perform a prediction sample filtering procedure. Predictive sample filtering may be referred to as post filtering. Some or all of the prediction samples may be filtered by the prediction sample filtering procedure. In some cases, the prediction sample filtering procedure may be omitted.

The image decoding apparatus 200 generates residual samples for the current block based on the received residual information. The image decoding apparatus 200 may generate reconstructed samples for the current block based on the prediction samples and the residual samples, and derive a reconstructed block including the reconstructed samples (S630). A reconstructed picture for the current picture may be generated based on the reconstructed block. As described above, the in-loop filtering procedure is further applicable to the reconstructed picture.

Here, the intra prediction unit 265 of the image decoding apparatus 200 may include an intra prediction mode/type determination unit 266, a reference sample derivation unit 267 and a prediction sample derivation unit 268, the intra prediction mode/type determination unit 266 may determine the intra prediction mode/type for the current block based on the intra prediction mode/type information generated and signaled by the intra prediction mode/type determination unit 186 of the image encoding apparatus 100, the reference sample derivation unit 267 may derive the neighboring reference samples of the current block, and the prediction sample derivation unit 268 may derive the prediction samples of the current block. Meanwhile, although not shown, when the above-described prediction sample filtering procedure is performed, the intra prediction unit 265 may further include a prediction sample filter (not shown).

The intra prediction mode information may include flag information (e.g., intra_luma_mpm_flag) specifying whether a most probable mode (MPM) or a remaining mode is applied to the current block, and, when the MPM is applied to the current block, the prediction mode information may further include index information (e.g., intra_luma_mpm_idx) specifying one of intra prediction mode candidates (MPM candidates). The intra prediction mode candidates (MPM candidates) may be configured as an MPM candidate list or an MPM list. In addition, when the MPM does not apply to the current block, the intra prediction mode information may further include remaining mode information (e.g., intra_luma_mpm_remainder) specifying one of the remaining intra prediction modes excluding the intra prediction mode candidates (MPM candidates). The image decoding apparatus 200 may determine the intra prediction mode of the current block based on the intra prediction mode information. For the above-described MIP, a separate MPM list may be configured.

In addition, the intra prediction type information may be implemented in various forms. For example, the intra prediction type information may include intra prediction type index information specifying one of the intra prediction types. As another example, the intra prediction type information may include at least one of reference sample line information (e.g., intra_luma_ref_idx)) specifying whether the MRL is applied to the current block and which reference sample line is used if applied, ISP flag information (e.g., intra_subpartitions_mode_flag) specifying whether the ISP is applied to the current block, ISP type information (e.g., intra_subpartitions_split_flag) specifying the split type of subpartitions when the ISP is applied, flag information specifying whether PDCP is applied or flag information specifying whether LIP is applied. In addition, the intra prediction type information may include a MIP flag specifying whether MIP is applied to the current block.

The intra prediction mode information and/or the intra prediction type information may be encoded/decoded through the coding method described in the present disclosure. For example, the intra prediction mode information and/or the intra prediction type information may be encoded/decoded through entropy coding (e.g., CABAC or CAVLC) based on truncated (rice) binary code.

## Template based intra mode derivation (TIMD)

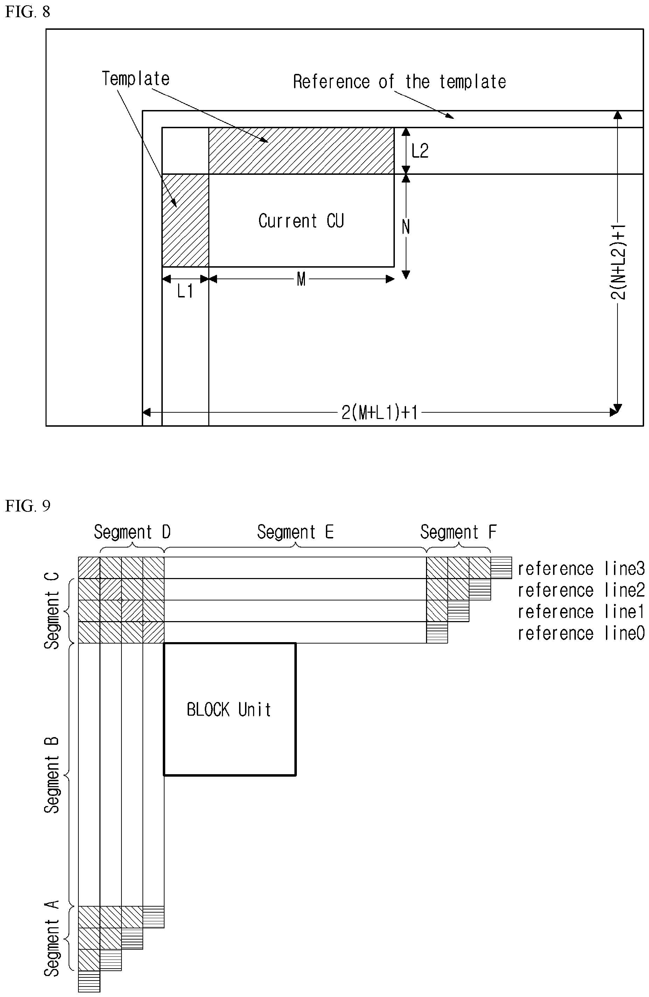

FIG. 8 is a diagram for explaining a method of deriving an intra mode based on a template (TIMD).

In TIMD, for the intra prediction mode (IPM) intra mode of the adjacent intra blocks and inter blocks, a Sum of Absolute Transformed Difference (SATD) between a prediction block predicted from a template area and an actual reconstruction sample may be obtained, and then mode with the smallest SATD may be selected as the intra mode of a current block.

Alternatively, in TIMD, the two modes with the smallest SATD may be selected, and then the prediction blocks for the two prediction modes may be blended using a weighted sum method to be used as the prediction block of the current block.

The method of blending two modes may be applied when the following condition (Equation 1) is satisfied.

$$[\text{Equation 1}]$$

$$costMode2 < 2*costMode1$$

If the above conditions are satisfied, the two modes are blended to generate a prediction block, otherwise, only one mode with the minimum SATD value may be selected.

The weight ratio when blending two prediction blocks is as shown in Equation 2 below.

$$[Equation 2]$$
$$weight1 = costMode2/(costMode1 + costMode2)$$
$$weight2 = 1 - weight1$$

## Multi-reference line (MRL) intra prediction

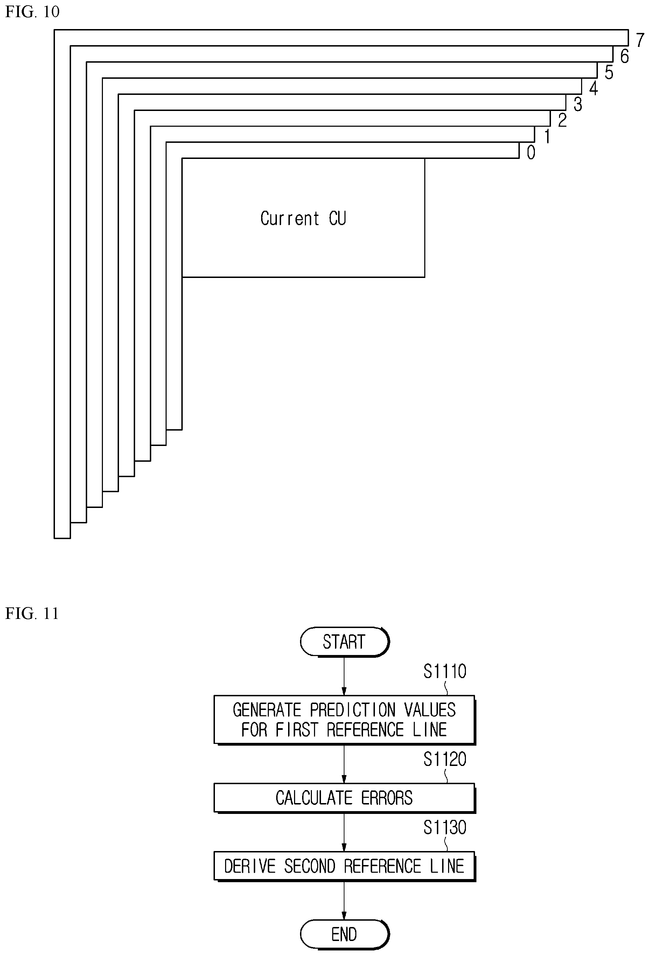

FIGS. 9 and 10 are diagrams for explaining the multi-reference line (MRL) (intra prediction) mode.

In the conventional intra prediction, only the neighboring samples of the top first line and left first line of the current block were used as reference samples for intra prediction. However, in the multiple-reference line (MRL) method, intra prediction may be performed using neighboring samples located on a sample line separated by one to three samples from the above and/or left side of the current block as reference samples. FIG. 9 is a view illustrating the multi-reference line. Here, the multi-reference line index (ex. mrl_idx) indicates which line is used for intra prediction of the current block.

For example, the multi-reference line index may be signaled via the coding unit syntax of Table 1. The multi-reference line index may be configured in the form of an intra_luma_ref_idx syntax element.

[Table 1]

| coding_unite( x0, y0, cbWidth, cbHeight, treeType ) { |
|---|
| if( slice_type != I ) { |
|    **cu_skip_flag**[ x0 ][ y0 ] |
|   if( cu_skip_flag[ x0 ][ y0 ] = = 0 ) |
|    **pred_mode_flag** |
| } |
| if( CuPredMode[ x0 ][ y0 ] = = MODE_INTRA ) { |
|   if( treeType = = SINGLE_TREE ‖ treeType = = DUAL_TREE_LUMA ) { |
|    if( ( y0 % CtbSizeY) > 0) |
|     **intra_luma_ref_idx**[ x0 ][ y0 ] ... |
|    if (intra_luma_ref_idx[ x0 ][ y0 ] = = 0) |
|     **intra_luma_mpm_flag**[ x0 ][ y0 ] |
|    if( intra_luma_mpm_flag[ x0 ][ y0 ] ) |
|     **intra_luma_mpm_idx**[ x0 ] [ y0 ] |
|    else |
|     **intra_luma_mpm_remainder**[ x0 ][ y0 ] |
|   } |
| ... |
| } |

intra_luma_ref_idx may specify the intra reference line index IntraLumaRefLineIdx[ x0 ][ y0 ] shown in Table 2. If intra_luma_ref_idx is not present, the value of intra_luma_ref_idx may be inferred to be 0. intra_luma_ref_idx may be called (intra) reference sample line index, mrl_idx, or index information. In addition, intra_luma_ref_idx may also be called intra_luma_ref_line_idx.

[Table 2]

| intra_luma_ref_idx[ x0 ][ y0 ] | IntraLumaRefLineIdx[ x0 ][ y0 ] |
|---|---|
| 0 | 0 |
| 1 | 1 |

(continued)

| intra_luma_ref_idx[ x0 ][ y0 ] | IntraLumaRefLineIdx[ x0 ][ y0 ] |
|---|---|
| 2 | 3 |

MRL may be disabled for blocks on the first line (row) within the CTU. This is to prevent extended reference lines outside the current CTU line from being used. In addition, PDPC may be disabled when the above-described additional reference line is used.

In the MRL method, intra prediction is performed using neighboring samples located in a sample line separated by one to three samples from the above and/or left side of the current block as reference samples, but in the extended MRL method, it is extended so that intra prediction is performed using neighboring samples located in a sample line separated by twelve samples from the upper and/or left side of the current block as reference samples. The reference sample line index of the extended MRL list consists of {1, 3, 5, 7, 12}, and FIG. 10 shows an example of the extended MRL candidate list. In addition, Table 3 shows the relationship between intra_luma_ref_idx and IntraLumaRefLineIdx[ x0 ][ y0 ] in the extended MRL.

[Table 3]

| intra_luma_ref_idx[ x0 ][ y0 ] | IntraLumaRefLineIdx[ x0 ][ y0 ] |
|---|---|
| 0 | 0 |
| 1 | 1 |
| 2 | 3 |
| 3 | 5 |
| 4 | 7 |
| 5 | 12 |

## **Embodiment**

The present disclosure proposes embodiments for performing MRL based on a template. FIG. 11 is a flowchart illustrating an image encoding method and an image decoding method according to an embodiment of the present disclosure.

Referring to FIG. 11, the image encoding apparatus 100 and the image decoding apparatus 200 may generate prediction values for a first reference line (S1110).

The first reference line may correspond to any one of multiple reference lines that may be used for MRL. Here, the multiple reference lines may correspond to reference lines for a current block. In addition, the first reference line may correspond to the template of the TIMD described above. The first reference line may be a reference line that is closest to the current block (for example, a reference line with an index value of 0) among the multiple reference lines.

The prediction value for the first reference line may be generated based on each of the multiple reference lines. For example, the prediction value for the first reference line may be generated based on any one reference line among the multiple reference lines, and another prediction value for the first reference line may be generated based on another reference line among the multiple reference lines.

The image encoding apparatus 100 and the image decoding apparatus 200 may calculate an error between each prediction value and a reconstructed value of the first reference line (the reconstruction value of the first reference line) (S1120). Since the prediction value is generated based on each of the multiple reference lines, the error may also be calculated for each of the multiple reference lines.

Here, the error may be calculated based on a 'difference between the prediction block predicted from the template area and an actual reconstruction sample' of the TIMD described above. The error may be referred to as "cost", "error", "difference", etc. That is, in the present disclosure, "error", "cost", "error", "difference", etc. may have the same meaning.

The image encoding apparatus 100 and the image decoding apparatus 200 may derive a second reference line based on the calculated errors (S1130). The second reference line may correspond to a reference line to be used for intra prediction of the current block among multiple reference lines.

Hereinafter, embodiments proposed through the present disclosure will be described in detail. The embodiments described below may be performed as at least one process among the processes expressed in FIG. 11.

**Embodiment 1**

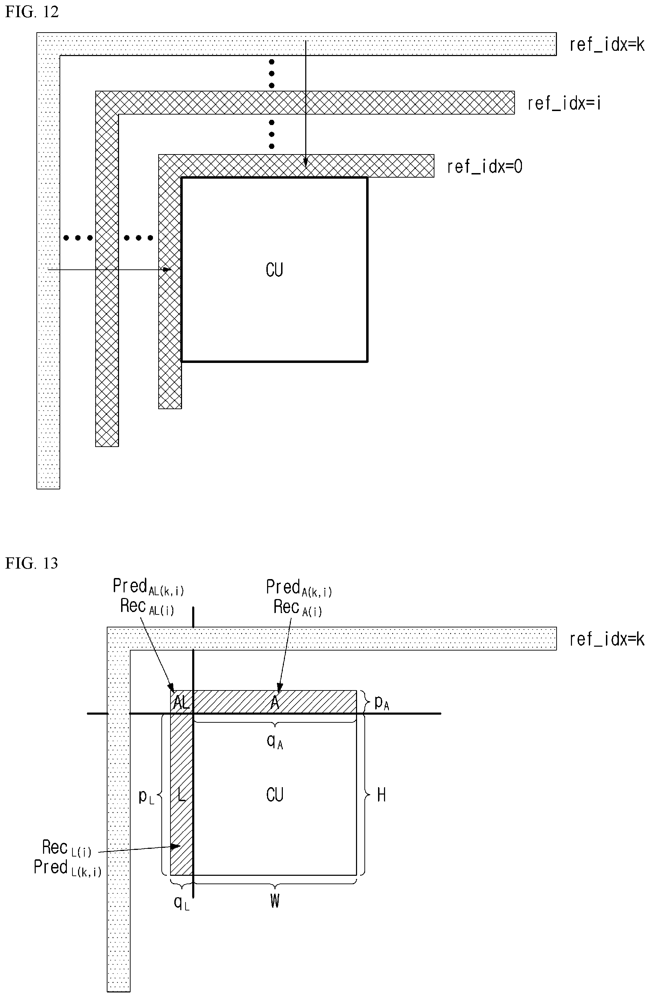

Embodiment 1 relates to a method of deriving a multi-reference line index (ref_idx) in the image encoding apparatus 100 and the image decoding apparatus 200 without signaling it when performing MRL. Drawings for explaining Embodiment 1 are shown in FIG. 12 and FIG. 13.

In FIG. 12, k may be an integer greater than or equal to 1, and i may be an integer greater than or equal to 0 and less than k. Referring to FIG. 12, samples of an i-th (ref_idx=i) reference line may be predicted using samples of multiple reference lines (ref_idx=0 ... k) for a current block (CU). The i-th reference line may correspond to a first reference line. Among the prediction values of the i-th reference line, the prediction value most similar to the reconstruction value (reconstruction signal) of the i-th reference line, that is, the most similar reference line (the second reference line), may be determined as a reference line for predicting the current block (or a reference line index of the corresponding reference line). In the above description, the prediction value of the reference line may be the reference line index of the corresponding reference line.

In FIG. 13, $Pred_{A(k)}$ may be a prediction signal of area 'A' predicted with the reference sample of ref_idx=k, $Pred_{L(k)}$ may be a prediction signal of area 'L' predicted with the reference sample of ref_idx=k, and $Pred_{AL(k)}$ may be a prediction signal of area 'AL' predicted with the reference sample of ref_idx=k. In addition, $Rec_A$ may be a previously reconstructed signal of area 'A', $Rec_L$ may be a previously reconstructed signal of area 'L', and $Rec_{AL}$ may be a previously reconstructed signal of area 'AL'. In addition, the width $q_A$ of area 'A' ($p_A x q_A$) may be different from the width W of the current block, and the height $p_A$ may be greater than or equal to 1, and less than k. In addition, the height $p_L$ of area 'L' ($p_L x q_L$) may be different from the height H of the current block, and the width $q_L$ may be greater than or equal to 1, and less than k. Additionally, $p_A$, $q_L$ in area 'AL' ($p_A x q_L$) may be greater than or equal to 1 and less than k.

$Rec_L$, $Rec_A$ and $Rec_{AL}$ may correspond to the previously reconstructed signals of 'L', 'A', and 'AL', which are areas adjacent to the current block (CU), respectively, and the values (signals) $Pred_{L(k)}$, $Pred_{A(k)}$ and $Pred_{AL(k)}$ predicted with the reference sample of ref_idx=k may be generated at the same location of $Rec_L$, $Rec_A$ and $Rec_{AL}$, respectively.

Meanwhile, the error between the prediction values and the reconstruction values may be calculated using the sum of absolute differences (SAD), SATD, or sum of squared differences (SSD). For example, the error may be calculated using Equation 3 using SAD between ($Pred_{L(k)}$, $Rec_L$), ($Pred_{A(k)}$, $Rec_A$), ($Pred_{AL(k)}$, $Rec_{AL}$). N represents the number of prediction values.

[Equation 3]

$$Cost = \frac{1}{N}\left(\sum abs(Rec_A - Pred_{A(k)}) + \sum abs(Rec_L - Pred_{L(k)}) + \sum abs(Rec_{AL} - Pred_{AL(k)})\right)$$

As another example, if only the left and above reference samples of the current block are available, the error may be computed through Equation 4.

[Equation 4]

$$Cost = \frac{1}{N}\left(\sum abs(Rec_A - Pred_{A(k)}) + \sum (abs(Rec_L - Pred_{L(k)}))\right)$$

As another example, if only the left reference sample of the current block is available, the error may be computed through Equation 5.

[Equation 5]

$$Cost = \frac{1}{N}\sum (abs(Rec_L - Pred_{L(k)}))$$

As another example, if only the above reference samples of the current block are available, the error may be computed through Equation 6.

[Equation 6]

$$Cost = \frac{1}{N}\sum abs(Rec_A - Pred_{A(k)})$$

In other embodiments, embodiments of the present disclosure may be disabled if the current block is located at a slice boundary, a CTU boundary, a picture boundary, or the like.

Meanwhile, the method of Embodiment 1 for deriving ref_idx through a 1-bit first flag (derive_mrl_flag) and the existing MRL technology may be selectively used.

[Table 4]

| Coding_Unit(...){ | Descriptor | Remarks |
|---|---|---|
| ... | | |
| mrl_flag | ae(v) | 0 or 1 |
| if( mrl_flag !=0 ){ | | |
| **derive_mrl_flag** | ae(v) | derive MRL flag |
| if**(!derive_mrl_flag)** | | |
| intra_luma_ref_idx | ae(v) | MRL line idx(>0) |
| } | | |
| ... | | |
| } | | |

As shown in Table 4, the value of mrl_flag indicating whether MRL is applied is determined, and when MRL is applied (mrl_flag=0), derive_mrl_flag may be signaled. When derive_mrl_flag=1, the reference line with the minimum error calculated as proposed in Embodiment 1 may be determined to be the reference line (second reference line) for predicting the current block. In contrast, when derive mrl_flag=0, a multi-reference line index (intra_luma_ref_idx) is signaled in the same manner as the existing method, and the MRL mode may be performed using this.

In other embodiments, as shown in Table 5, if mrl_flag is not 0, the second reference line may be derived without signaling a separate flag and multi-reference line index.

[Table 5]

| Coding_Unit(...){ | Descriptor | Remarks |
|---|---|---|
| ... | | |
| mrl_flag | ae(v) | 0 or 1 |
| ... | | |
| } | | |

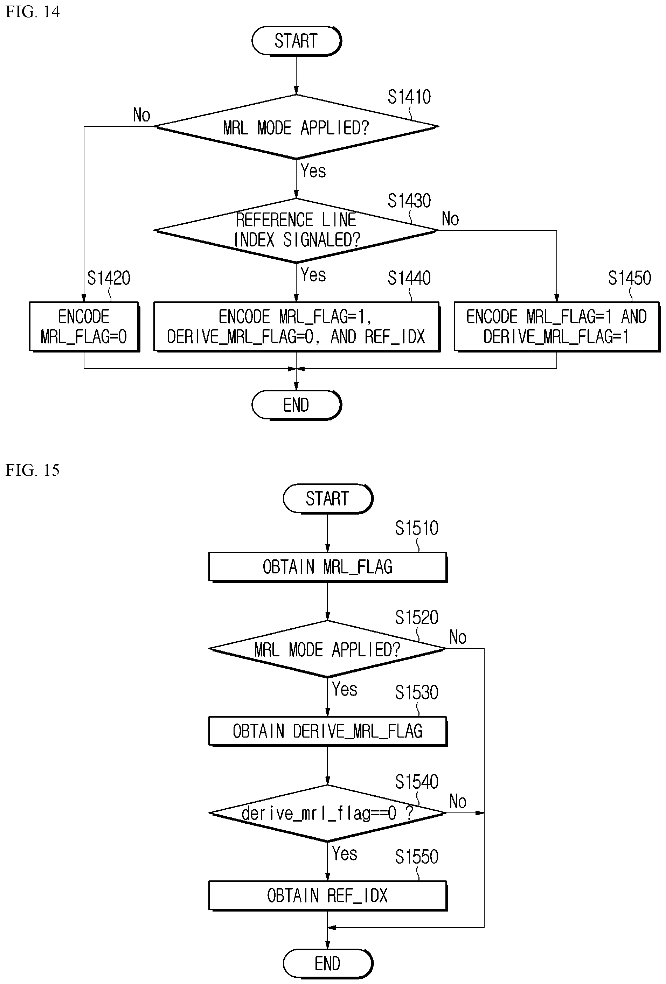

FIG. 14 is a flowchart illustrating an image encoding method according to Embodiment 1, and FIG. 15 is a flowchart illustrating an image decoding method according to Embodiment 1.

Referring to FIG. 14, the image encoding apparatus 100 determines whether the MRL mode is applied (S1410), and upon determining that the MRL mode is not applied, mrl_flag=0 may be encoded (S1420).

Upon determining that the MRL mode is applied, the image encoding apparatus 100 may determine whether or not to signal a reference line index (ref_idx) (S1430). Upon determining that the reference line index is signaled (i.e., if the conventional MRL method is applied), the image encoding apparatus 100 may encode mrl_flag=1, derive_mrl_flag=0, and ref_idx (S1440). On the other hand, upon determining that the reference line index is not signaled (i.e., if the method proposed in Embodiment 1 is applied), the image encoding apparatus 100 may encode mrl_flag=1 and derive_mrl_flag=1 (S1450).

Referring to FIG. 15, the image decoding apparatus 200 may obtain mrl_flag from a bitstream (S1510) and determine whether to apply the MRL mode based on the value of mrl_flag (S1520).

When the MRL mode is applied (mrl_flag=1), the image decoding apparatus 200 may obtain derive_mrl_flag from the bitstream (S1530) and determine the value of derive _mrl_flag (S1540).

When derive_mrl_flag=0, the existing MRL method is applied, so the image decoding apparatus 200 may obtain ref_idx from the bitstream (S1550) and perform intra prediction for the current block based on the reference line indicated by ref_idx among the multiple reference lines.

In contrast, when derive_mrl_flag=1, since the method proposed through Embodiment 1 is applied, the image decoding apparatus 200 may derive the second reference line among the multiple reference lines based on the error described above without obtaining ref_idx, and perform intra prediction for the current block based on the second reference line.

According to the embodiments described above, prediction performance can be improved and coding efficiency can be enhanced by deriving multi-reference line index without signaling it.

**Embodiment 2**

Embodiment 2 corresponds to a method of reordering multiple reference line candidates (reference line candidate list or lists) based on an error.

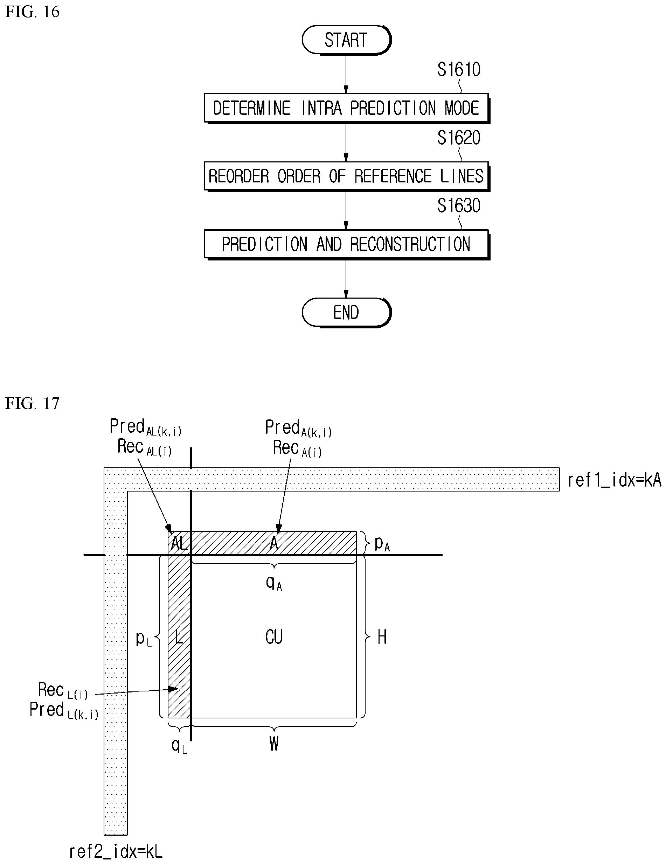

FIG. 16 is a flowchart illustrating an image encoding method and an image decoding method according to Embodiment 2.

Referring to FIG. 16, the image encoding apparatus 100 and the image decoding apparatus 200 may determine an intra prediction mode (ipm) of a current block (S1610).

The image encoding apparatus 100 may encode and signal information about the determined intra prediction mode. The image decoding apparatus 200 may obtain information about the intra prediction mode from a bitstream and determine the intra prediction mode based on this.

The DIMD mode (decoder-side intra mode derivation), MIP (matrix-based intra prediction) mode, MPM (most probable modes), SMPM (secondary most probable mode) mode, ISP (intra sub-partitions) mode, etc. may be included to obtain the intra prediction mode. In addition, mrl_idx may be obtained in step S1610.

The image encoding apparatus 100 and the image decoding apparatus 200 may reorder the order of multiple reference lines (S1620).

The image encoding apparatus 100 and the image decoding apparatus 200 may calculate errors between prediction values obtained by predicting the first reference line and reconstruction values of the first reference line, and reorder the reference line candidates based on the calculated errors. The error calculation may be performed by the methods described above. Specifically, the errors may be calculated using any one of the methods of Equations 3 to 6. For example, if the reference line candidate list is mrl_candidate_list={0, 1, 3, 5, 7, 12} and access from the current block to the twelfth reference line is possible, errors are calculated for candidates 1, 3, 5, 7, and 12 of each list except for the 0-th reference line, and the reference line candidates may be reordered in ascending order based on the calculated errors.

The image encoding apparatus 100 and the image decoding apparatus 200 may perform prediction and reconstruction on the current block based on the reordered list (S1630). Among the reordered reference line candidates, the reference line indicated by mrl_idx is determined to be the second reference line, and intra prediction and reconstruction based on the second reference line may be performed.

According to an embodiment, the image encoding apparatus 100 and the image decoding apparatus 200 may perform a process of updating mrl_idx of reference line candidates (reference line candidate list) in step S1620.

For example, if mrl_candidate_list={0, 1, 3, 5, 7, 12} and mrl_idx=7 is obtained in step S1610, and the reference line candidate list is reordered to mrl_candidate_list={0, 1, 7, 5, 3, 12} in step S1620, since the fourth position in the reference line candidate list was 7, the value of mrl_idx may be updated to 3 based on the reordered reference line candidate list.

**Embodiment 3**

Embodiment 3 relates to a method of configuring reference line candidates as combinations of above reference lines and left reference lines.

A drawing for explaining the above reference lines and the left reference lines is shown in FIG. 17. In FIG. 17, $k_A$ and $k_L$ may have the same or different values. The above reference lines are reference lines located at the above (A) side of the current block (CU), and the left reference lines may be reference lines located at the left (L) side of the current block.

The image encoding apparatus 100 and the image decoding apparatus 200 may configure a reference line candidate list. The reference line candidate list may be configured with a reference line candidate list (mrl_idx_candi_above) for above reference lines and a reference line candidate list (mrl_idx_candi_left) for left reference lines.

The image encoding apparatus 100 and the image decoding apparatus 200 may generate prediction values for the first reference line based on each combination of the above reference lines and the left reference lines, and derive the second reference line based on any one of the generated combinations.

Assuming that mrl_idx_candi_above={0, 1, 3, 5, 7, 12}, mrl_idx_candi_left={0, 1, 3, 5, 7, 12}, the error may be calculated by various combinations of $(k_L, k_A)$. For example, $(k_L, k_A)$ may have combinations of (0, 3), (1, 3), (3, 3), (5, 3), (7, 3), (12, 3). Various combinations of $(k_L, k_A)$ may be defined as an agreement between the image encoding apparatus 100 and the image decoding apparatus 200.

According to embodiments, when a reference line (ref_idx=k) with a minimum error is determined, combinations of $(k_L, k_A)$ may be additionally generated using the reference lines. For example, $(k_L, k_A)$ may be composed of combinations of (k, k-1), (k, k+1), (k-1, k), (k+1, k) that are close to the determined reference line (ref_idx=k).

According to embodiments, when the x value of the top left position of the current block (CU) is 0 or the y value is 0, or when the current block is located at a slice boundary, a CTU boundary, a picture boundary, etc., $(k_L, k_A)$ may be composed of the following combinations.

- If the x value of the top left position of the CU is 0 or is located at a slice boundary, CTU boundary, picture boundary, etc.: $(k_L, k_A)=(0, k)$
- If the y value of the top left position of the CU is 0 or is located at a slice boundary, CTU boundary, picture boundary, etc.: $(k_L, k_A)=(k, 0)$
- If both x and y values are 0 or are located at a slice boundary, CTU boundary, picture boundary, etc.: The proposed combination is not performed

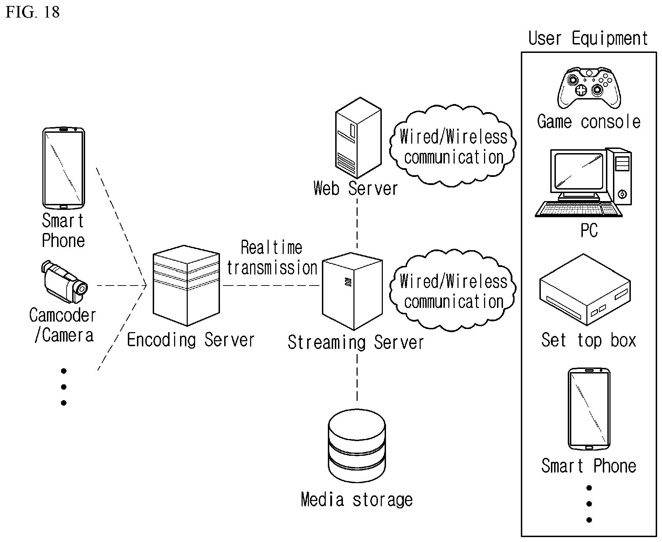

FIG. 18 is a view showing a content streaming system, to which an embodiment of the present disclosure is applicable.

As shown in FIG. 18, the content streaming system, to which the embodiment of the present disclosure is applied, may largely include an encoding server, a streaming server, a web server, a media storage, a user device, and a multimedia input device.

The encoding server compresses content input from multimedia input devices such as a smartphone, a camera, a camcorder, etc. into digital data to generate a bitstream and transmits the bitstream to the streaming server. As another example, when the multimedia input devices such as smartphones, cameras, camcorders, etc. directly generate a bitstream, the encoding server may be omitted.

The bitstream may be generated by an image encoding method or an image encoding apparatus, to which the embodiment of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server may deliver it to a streaming server, and the streaming server may transmit multimedia data to the user. In this case, the content streaming system may include a separate control server. In this case, the control server serves to control a command/response between devices in the content streaming system.

The streaming server may receive content from a media storage and/or an encoding server. For example, when the content is received from the encoding server, the content may be received in real time. In this case, in order to provide a smooth streaming service, the streaming server may store the bitstream for a predetermined time.

Examples of the user device may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (e.g., smartwatches, smart glasses, head mounted displays), digital TVs, desktops computer, digital signage, and the like.

Each server in the content streaming system may be operated as a distributed server, in which case data received from each server may be distributed.

The scope of the disclosure includes software or machine-executable commands (e.g., an operating system, an application, firmware, a program, etc.) for enabling operations according to the methods of various embodiments to be executed on an apparatus or a computer, a non-transitory computer-readable medium having such software or commands stored thereon and executable on the apparatus or the computer.

**Industrial Applicability**

The embodiments of the present disclosure may be used to encode or decode an image.

**Claims**

1. An image decoding method performed by an image decoding apparatus, the image decoding method comprising:

    generating prediction values obtained by predicting a first reference line for a current block based on each of a plurality of reference lines for the current block;
    calculating errors between the prediction values and reconstruction values of the first reference line; and
    deriving at least one second reference line to be used for intra prediction of the current block among the plurality of reference lines, based on the errors.

2. The image decoding method of claim 1, wherein the first reference line is a reference line closest to the current block among the plurality of reference lines.

3. The image decoding method of claim 1, wherein the second reference line is derived as a reference line having a minimum error among the plurality of reference lines.

4. The image decoding method of claim 3, wherein the second reference line is derived as the reference line having the minimum error, based on a first flag obtained from a bitstream indicating a first value.

5. The image decoding method of claim 1, wherein the deriving the second reference line comprises:

   reordering the order of the plurality of reference lines based on the errors; and
   deriving a reference line indicated by index information among the plurality of reordered reference lines as the second reference line.

6. The image decoding method of claim 5, wherein the plurality of reference lines is reordered in ascending order based on the errors.

7. The image decoding method of claim 5, wherein the index information is obtained from the bitstream, based on a first flag obtained by a bitstream indicating a second value.

8. The image decoding method of claim 1,

   wherein the plurality of reference lines includes above reference lines and left reference lines,
   wherein the prediction values are generated based on each of combinations of the above reference lines and the left reference lines, and
   wherein the second reference line is derived based on any one of the combinations.

9. An image encoding method performed by an image encoding apparatus, the image encoding method comprising:

   generating prediction values obtained by predicting a first reference line for a current block based on each of a plurality of reference lines for the current block;
   calculating errors between the prediction values and reconstruction values of the first reference line; and
   deriving at least one second reference line to be used for intra prediction of the current block among the plurality of reference lines, based on the errors.

10. A method of transmitting a bitstream generated by an image encoding method, the image encoding method comprising:

    generating prediction values obtained by predicting a first reference line for a current block based on each of a plurality of reference lines for the current block;
    calculating errors between the prediction values and reconstruction values of the first reference line; and
    deriving at least one second reference line to be used for intra prediction of the current block among the plurality of reference lines, based on the errors.

FIG. 1

FIG. 2

EP 4 550 777 A1

IMAGE ENCODING APPARATUS — 100

INPUT IMAGE → IMAGE PARTITIONER (110) → 115 (+/−) → TRANSFORMER (120) → QUANTIZER (130) → ENTROPY ENCODER (190) → BITSTREAM

DPB / MEMORY (170) → INTER PREDICTOR (180), INTRA PREDICTOR (185)

FILTER (160) ← 155 (+) ← INVERSE TRANSFORMER (150) ← DEQUANTIZER (140)

EP 4 550 777 A1

FIG. 3

FIG. 4

```
                    ┌─────────┐
                    │  START  │
                    └─────────┘
                         │
                         ▼                              S400
    ┌────────────────────────────────────────────┐
    │         PERFORM PREDICTION (DETERMINE        │
    │      INTRA PREDICTION MODE/TYPE, DERIVE      │
    │         NEIGHBORING REFERENCE SAMPLES,       │
    │       AND GENERATE PREDICTION SAMPLES)       │
    └────────────────────────────────────────────┘
                         │
                         ▼                              S410
    ┌────────────────────────────────────────────┐
    │     RESIDUAL PROCESSING (DERIVE RESIDUAL     │
    │    SAMPLES ON BASIS OF PREDICTION SAMPLES)   │
    └────────────────────────────────────────────┘
                         │
                         ▼                              S420
    ┌────────────────────────────────────────────┐
    │        ENCODE IMAGE/VIDEO INFORMATION        │
    │       INCLUDING PREDICTION INFORMATION       │
    │            AND RESIDUAL INFORMATION          │
    └────────────────────────────────────────────┘
                         │
                         ▼
                    ┌─────────┐
                    │   END   │
                    └─────────┘
```

FIG. 5

```
                                            185
                          ┌──────────────────────────────┐
                          │  ┌────────────────────────┐  │
                          │  │    INTRA PREDICTION     │  │
                          │  │       MODE/TYPE         │  │      INTRA PREDICTION
   ORIGINAL PICTURE       │  │  DETERMINATION UNIT     │  │ ──► MODE/TYPE INFORMATION
   ──────────────────────►│  │        (186)           │  │
                          │  └────────────────────────┘  │
                          │  ┌────────────────────────┐  │
                          │  │   REFERENCE SAMPLE      │  │
                          │  │    DERIVATION UNIT      │  │
                          │  │        (187)           │  │
   RECONSTRUCTED REFERENCE│  └────────────────────────┘  │      PREDICTION SAMPLE(S)
   ──────────────────────►│  ┌────────────────────────┐  │ ──►
   REGION IN CURRENT PICTURE │  PREDICTION SAMPLE      │  │
                          │  │    DERIVATION UNIT      │  │
                          │  │        (188)           │  │
                          │  └────────────────────────┘  │
                          └──────────────────────────────┘
                              INTRA PREDICTION UNIT
```

EP 4 550 777 A1

FIG. 6

```
                    ┌─────────────┐
                    │    START    │
                    └──────┬──────┘
                           │                  S600
            ┌──────────────▼──────────────┐
            │ DETERMINE INTRA PREDICTION   │
            │    MODE/TYPE FOR CURRENT     │
            │       BLOCK ON BASIS OF      │
            │  RECEIVED PREDICTION         │
            │        INFORMATION           │
            └──────────────┬──────────────┘
                           │                  S610
            ┌──────────────▼──────────────┐
            │ DERIVE NEIGHBORING REFERENCE │
            │           SAMPLES            │
            └──────────────┬──────────────┘
                           │                  S620
            ┌──────────────▼──────────────┐
            │      PERFORM PREDICTION      │
            │ (GENERATE PREDICTION SAMPLES)│
            └──────────────┬──────────────┘
                           │                  S630
            ┌──────────────▼──────────────┐
            │  DERIVE RESIDUAL SAMPLES ON  │
            │  BASIS OF RESIDUAL INFORMATION│
            └──────────────┬──────────────┘
                           │                  S640
            ┌──────────────▼──────────────┐
            │    GENERATE RECONSTRUCTED    │
            │ BLOCK/PICTURE ON BASIS OF    │
            │   PREDICTION SAMPLES AND     │
            │      RESIDUAL SAMPLES        │
            └──────────────┬──────────────┘
                           │
                    ┌──────▼──────┐
                    │     END     │
                    └─────────────┘
```

FIG. 7

```
                                              265
                        ┌──────────────────────┐
                        │  ┌──────────────────┐ │
                        │  │ INTRA PREDICTION │ │
                        │  │    MODE/TYPE     │ │
                        │  │ DETERMINATION    │ │
                        │  │    UNIT (266)    │ │
   INTRA PREDICTION     │  └──────────────────┘ │
  MODE/TYPE INFORMATION │  ┌──────────────────┐ │   PREDICTION SAMPLE
  ─────────────────────►│  │ REFERENCE SAMPLE │ │─────────────────────►
                        │  │ DERIVATION UNIT  │ │
                        │  │     (267)        │ │
 RECONSTRUCTED REFERENCE│  └──────────────────┘ │
  REGION IN CURRENT     │  ┌──────────────────┐ │
  PICTURE ─────────────►│  │ PREDICTION SAMPLE│ │
                        │  │ DERIVATION UNIT  │ │
                        │  │     (268)        │ │
                        │  └──────────────────┘ │
                        └──────────────────────┘
                            INTRA PREDICTOR
```

24

FIG. 8

FIG. 9

FIG. 10

FIG. 11

START

GENERATE PREDICTION VALUES
FOR FIRST REFERENCE LINE — S1110

CALCULATE ERRORS — S1120

DERIVE SECOND REFERENCE LINE — S1130

END

FIG. 12

ref_idx=k

ref_idx=i

ref_idx=0

CU

FIG. 13

$Pred_{AL(k,i)}$
$Rec_{AL(i)}$

$Pred_{A(k,i)}$
$Rec_{A(i)}$

ref_idx=k

AL

A

$p_A$

$q_A$

$p_L$

L

CU

H

$Rec_{L(i)}$
$Pred_{L(k,i)}$

$q_L$

W

FIG. 14

```
                          ┌──────────┐
                          │  START   │
                          └────┬─────┘
                               │
                               ▼              S1410
         No        ╱◇◇◇◇◇◇◇◇◇◇◇◇◇◇◇◇◇◇◇◇◇╲
    ┌──────────────◇   MRL MODE APPLIED?   ◇
    │              ╲◇◇◇◇◇◇◇◇◇◇◇◇◇◇◇◇◇◇◇◇◇╱
    │                         │
    │                        Yes
    │                         ▼            S1430
    │            ╱◇◇◇◇◇◇◇◇◇◇◇◇◇◇◇◇◇◇◇◇◇◇◇╲      No
    │           ◇   REFERENCE LINE         ◇─────────────┐
    │           ◇   INDEX SIGNALED?        ◇             │
    │            ╲◇◇◇◇◇◇◇◇◇◇◇◇◇◇◇◇◇◇◇◇◇◇◇╱             │
    │                        │                           │
  S1420                     Yes    S1440                S1450
    ▼                        ▼                           ▼
┌──────────┐   ┌──────────────────────────────┐  ┌──────────────────────────┐
│ ENCODE   │   │ ENCODE MRL_FLAG=1,           │  │ ENCODE MRL_FLAG=1 AND     │
│MRL_FLAG=0│   │ DERIVE_MRL_FLAG=0, AND REF_IDX│  │ DERIVE_MRL_FLAG=1         │
└────┬─────┘   └───────────────┬──────────────┘  └────────────┬─────────────┘
     │                         │                              │
     └─────────────────────────┼──────────────────────────────┘
                               ▼
                          ┌──────────┐
                          │   END    │
                          └──────────┘
```

FIG. 15

```
                          ┌──────────┐
                          │  START   │
                          └────┬─────┘
                               │                S1510
                               ▼
                  ┌────────────────────────────┐
                  │     OBTAIN MRL_FLAG         │
                  └──────────────┬─────────────┘
                               │                S1520
                               ▼
                  ╱◇◇◇◇◇◇◇◇◇◇◇◇◇◇◇◇◇◇◇◇◇◇╲      No
                 ◇   MRL MODE APPLIED?     ◇──────────┐
                  ╲◇◇◇◇◇◇◇◇◇◇◇◇◇◇◇◇◇◇◇◇◇╱           │
                               │                       │
                              Yes    S1530             │
                               ▼                       │
                  ┌────────────────────────────┐       │
                  │   OBTAIN DERIVE_MRL_FLAG    │       │
                  └──────────────┬─────────────┘       │
                               │                S1540   │
                               ▼                       │
                  ╱◇◇◇◇◇◇◇◇◇◇◇◇◇◇◇◇◇◇◇◇◇╲      No     │
                 ◇   derive_mrl_flag==0 ?   ◇──────────┤
                  ╲◇◇◇◇◇◇◇◇◇◇◇◇◇◇◇◇◇◇◇◇◇╱           │
                               │                       │
                              Yes    S1550             │
                               ▼                       │
                  ┌────────────────────────────┐       │
                  │      OBTAIN REF_IDX         │       │
                  └──────────────┬─────────────┘       │
                               │                       │
                               └───────────────────────┘
                               ▼
                          ┌──────────┐
                          │   END    │
                          └──────────┘
```

FIG. 16

```
        START

         │
         ▼                            S1610
┌─────────────────────────────────┐
│ DETERMINE INTRA PREDICTION MODE │
└─────────────────────────────────┘
         │
         ▼                            S1620
┌─────────────────────────────────┐
│  REORDER ORDER OF REFERENCE LINES│
└─────────────────────────────────┘
         │
         ▼                            S1630
┌─────────────────────────────────┐
│  PREDICTION AND RECONSTRUCTION  │
└─────────────────────────────────┘
         │
         ▼
         END
```

FIG. 17

FIG. 18

<div align="center">**INTERNATIONAL SEARCH REPORT**</div>

| International application No. |
|---|
| **PCT/KR2023/008850** |

**A.    CLASSIFICATION OF SUBJECT MATTER**

**H04N 19/105**(2014.01)i; **H04N 19/70**(2014.01)i; **H04N 19/593**(2014.01)i; **H04N 19/176**(2014.01)i

According to International Patent Classification (IPC) or to both national classification and IPC

**B.    FIELDS SEARCHED**

Minimum documentation searched (classification system followed by classification symbols)

H04N 19/105(2014.01); H04N 19/103(2014.01); H04N 19/11(2014.01); H04N 19/132(2014.01); H04N 19/137(2014.01); H04N 19/154(2014.01); H04N 19/593(2014.01); H04N 19/61(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 현재 블록(current block), 참조 라인(reference line), 인트라 예측(intra prediction), 오차(error), 재배열(rearrangement)

**C.    DOCUMENTS CONSIDERED TO BE RELEVANT**

| Category* | Citation of document, with indication, where appropriate, of the relevant passages | Relevant to claim No. |
|---|---|---|
| X | KR 10-2022-0016937 A (INDUSTRY ACADEMY COOPERATION FOUNDATION OF SEJONG UNIVERSITY) 10 February 2022 (2022-02-10)<br>See paragraphs [0009], [0091], [0113]-[0115] and [0121]; and claim 2. | 1-7,9-10 |
| Y |  | 8 |
| Y | KR 10-2021-0136157 A (LG ELECTRONICS INC.) 16 November 2021 (2021-11-16)<br>See paragraph [0108]. | 8 |
| A | KR 10-2021-0158432 A (WILUS INSTITUTE OF STANDARDS AND TECHNOLOGY INC. et al.) 30 December 2021 (2021-12-30)<br>See paragraphs [0057]-[0058]. | 1-10 |
| A | US 2019-0166370 A1 (VID SCALE, INC.) 30 May 2019 (2019-05-30)<br>See claim 1. | 1-10 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 September 2023** | **13 September 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/008850**

### C.    DOCUMENTS CONSIDERED TO BE RELEVANT

| Category* | Citation of document, with indication, where appropriate, of the relevant passages | Relevant to claim No. |
|---|---|---|
| A | KR 10-2021-0129729 A (HUAWEI TECHNOLOGIES CO., LTD.) 28 October 2021 (2021-10-28)<br>See paragraphs [0046]-[0047]. | 1-10 |

Form PCT/ISA/210 (second sheet) (July 2022)

**INTERNATIONAL SEARCH REPORT**
Information on patent family members

| International application No. |
| --- |
| **PCT/KR2023/008850** |

| Patent document cited in search report | | | Publication date (day/month/year) | Patent family member(s) | | | Publication date (day/month/year) |
| --- | --- | --- | --- | --- | --- | --- | --- |
| KR | 10-2022-0016937 | A | 10 February 2022 | KR | 10-2018-0041575 | A | 24 April 2018 |
| | | | | KR | 10-2021-0058782 | A | 24 May 2021 |
| | | | | KR | 10-2357282 | B1 | 28 January 2022 |
| KR | 10-2021-0136157 | A | 16 November 2021 | JP | 2022-532114 | A | 13 July 2022 |
| | | | | JP | 2023-073437 | A | 25 May 2023 |
| | | | | JP | 7256296 | B2 | 11 April 2023 |
| | | | | US | 2022-0060751 | A1 | 24 February 2022 |
| | | | | WO | 2020-226424 | A1 | 12 November 2020 |
| KR | 10-2021-0158432 | A | 30 December 2021 | CN | 115623198 | A | 17 January 2023 |
| | | | | CN | 115623199 | A | 17 January 2023 |
| | | | | KR | 10-2020-0130864 | A | 20 November 2020 |
| | | | | KR | 10-2344190 | B1 | 28 December 2021 |
| | | | | US | 11044470 | B2 | 22 June 2021 |
| | | | | US | 2021-0051319 | A1 | 18 February 2021 |
| | | | | US | 2021-0266527 | A1 | 26 August 2021 |
| | | | | WO | 2019-221472 | A1 | 21 November 2019 |
| US | 2019-0166370 | A1 | 30 May 2019 | EP | 3453174 | A1 | 13 March 2019 |
| | | | | US | 11722677 | B2 | 08 August 2023 |
| | | | | WO | 2017-192995 | A1 | 09 November 2017 |
| KR | 10-2021-0129729 | A | 28 October 2021 | CN | 113597761 | A | 02 November 2021 |
| | | | | CN | 114125468 | A | 01 March 2022 |
| | | | | EP | 3932056 | A1 | 05 January 2022 |
| | | | | EP | 3932056 | A4 | 03 August 2022 |
| | | | | JP | 2022-526304 | A | 24 May 2022 |
| | | | | JP | 7314300 | B2 | 25 July 2023 |
| | | | | US | 2022-0007052 | A1 | 06 January 2022 |
| | | | | WO | 2020-190179 | A1 | 24 September 2020 |

Form PCT/ISA/210 (patent family annex) (July 2022)